# EUROPEAN PATENT APPLICATION

(11) **EP 3 296 859 A1**
(43) Date of publication of application: **21.03.2018**
(21) Application number: 15891762.5
(22) Date of filing: 08.05.2015
(51) Int. Cl.: G06F 3/14, G06F 3/048

(54) **IMAGE OUTPUT CONTROL METHOD, IMAGE OUTPUT CONTROL PROGRAM, AND DISPLAY DEVICE**

(71) Applicant: Fujitsu Limited, Kawasaki-shi, Kanagawa 211-8588 (JP)
(72) Inventor: TOKITA, Shinobu, Kawasaki-shi, Kanagawa 211-8588 (JP)
(74) Representative: Haseltine Lake LLP
(86) International application number: PCT/JP2015/063281
(87) International publication number: WO 2016/181436

(57) **Abstract**

Disclosed is an image output control method executed by a computer to perform an image output process using respective screens of a plurality of display devices having different screen functions. The image output control method includes implementing a screen function in a first display device of the display devices to act as an image output destination, in response to failing to implement the screen function in a second display device of the display devices due to the different screen functions, and switching, after having the screen function implemented in the first display device, the image output destination to the second display device.

## Description

### TECHNICAL FIELD

The embodiments discussed herein relate to an image output control method, an image output control program, and a display device.

### BACKGROUND ART

In the related art technology, an external display having a large screen or a projector is coupled to a tablet terminal having a small screen of a size of approximately six to eight inches to use the small screen and the large screen. For example, a technology disclosed in the relate art provides a configuration to switch between a mirror display mode for displaying the same data on respective screens of the mobile terminal and the external display device, and an extended display mode for displaying different data; and the extended display mode is selected based on activation of a predetermined application (see, e.g., Patent Document 1).

### RELATED-ART DOCUMENTS

### PATENT DOCUMENTS

Patent Document 1: Japanese Laid-open Patent Publication No. 2011-217236
Patent Document 2: Japanese Laid-open Patent Publication No. 2014-53014

### DISCLOSURE OF INVENTION

### PROBLEM TO BE SOLVED BY INVENTION

However, when an application designed to be optimum according to a small screen size of the tablet terminal 10 is displayed on an external display with a large screen or a projector, an image is displayed with a large size, which not expected by the application, or an image is displayed with a disordered layout.

For example, an application for a tablet terminal is created with an optimum design for a small screen mounted on a tablet terminal. To display such an application on an external display, an application designed for a small screen results in being displayed on a large screen. As a result, sizes of characters and buttons are displayed larger than expected on the external display, the layout may be disordered according to the resolution, or images may not fit in a rendering area of the screen of the external display.

### MEANS FOR SOLVING PROBLEMS

### SUMMARY

Accordingly, it is an object in one aspect of disclosed embodiments to eliminate disadvantageous effects occurring upon outputting an image to two or more display devices having different screen functions.

An aspect of embodiments may provide an image output control method executed by a computer to perform an image output process using respective screens of a plurality of display devices having different screen functions. The image output control method includes implementing a screen function in a first display device of the display devices to act as an image output destination, in response to failing to implement the screen function in a second display device of the display devices due to the different screen functions, and switching, after having the screen function implemented in the first display device, the image output destination to the second display device.

### ADVANTAGEOUS EFFECT OF INVENTION

According to one aspect of embodiments, it is possible to eliminate disadvantageous effects occurring upon outputting an image to a plurality of display devices having different screen functions.

### BRIEF DESCRIPTION OF THE DRAWINGS

FIG. 1 is a diagram illustrating an example of an overall configuration of a display device according to an embodiment;
FIG. 2 is a table illustrating examples of a display pattern according to an embodiment;
FIG. 3 includes diagrams illustrating cases where a layout of a large screen is disordered;
FIG. 4 is a diagram illustrating an example of a functional configuration of a tablet terminal according to an embodiment;
FIG. 5 is a diagram illustrating an operation example upon activation of an application for every display pattern according to an embodiment;
FIG. 6 includes diagrams illustrating examples of a rendering area according to an embodiment;
FIG. 7 is a diagram illustrating an example of a hardware configuration of a tablet terminal according to an embodiment;
FIG. 8 is a diagram illustrating an example of a software configuration of a tablet terminal according to an embodiment;
FIG. 9 is a flowchart illustrating an example of an application activation process according to an embodiment;
FIG. 10 includes diagrams illustrating examples of screens resulting from an application activation process according to an embodiment;
FIG. 11 includes diagrams illustrating examples of screens resulting from an application activation process according to an embodiment;
FIG. 12 is a flowchart illustrating an example of an application termination process according to an embodiment;
FIG. 13 is a diagram illustrating an example of a launcher display screen and a display attribute information table according to an embodiment; and
FIG. 14 is a flowchart illustrating an example of an application activation process according to a modification of the embodiment.

### MODE FOR CARRYING OUT THE INVENTION

The following illustrates embodiments of the present invention with reference to the accompanying renderings. In the present specification and the renderings, the same reference numerals are assigned to constituent elements having substantially the same functional configurations, and duplicated explanation will be omitted.

### OVERALL CONFIGURATION

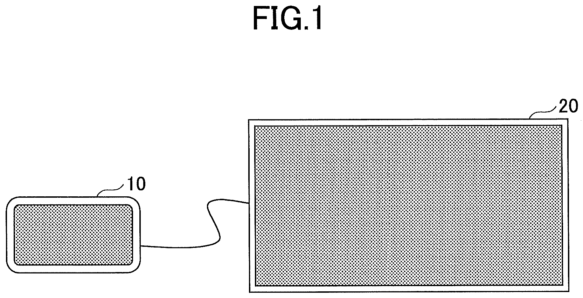

First, an example of an overall configuration of a display device according to an embodiment of the present invention will be described with reference to FIG. 1. A display device according to an embodiment includes a tablet terminal 10 and an external display 20. The tablet terminal 10 is coupled to the external display 20. In the present embodiment, two screens of the tablet terminal 10 and the external display 20 are integrally managed. The tablet terminal 10 and the external display 20 are examples of a display device.

The screen mounted on the tablet terminal 10 has a size of approximately six to eight inches, which is smaller than the size of the screen of the external display 20. Hence, in recent years, as depicted in FIG. 1, a large-screen external display 20 or a projector is coupled to a tablet terminal 10 having a small screen, such that the display devices are used to function as an alternative to a PC.

The tablet terminal 10 and the external display 20 are examples of two or more display devices having different screen functions. A screen of the tablet terminal 10 (hereinafter also referred to as a "main body screen") and a screen of the external display 20 (hereinafter also referred to as an "external screen") are examples of respective screens of two or more display devices. The differences in the functions of the screens of the display devices include at least one of a difference in screen resolution and presence or absence of a touch function of the screen.

In the present embodiment, there is a tablet terminal 10 as a main body, and a screen output control process according to the embodiment described later is executed when an application operates on an OS (Operating System) of the tablet terminal 10.

The external display 20 may be a television, a projector, a signage, or other display device insofar as the external display 20 has a larger screen than the main body screen of the tablet terminal 10. An HDMI (registered trademark) (High-Definition Multimedia Interface) cable or a DisplayPort cable may be used as a cable for connecting with the external display 20. A DVI (Digital Visual Interface) cable or analog RGB cable may alternatively be used for connecting with the external display 20. The tablet terminal 10 and the external display 20 may be wirelessly coupled (Wireless Display).

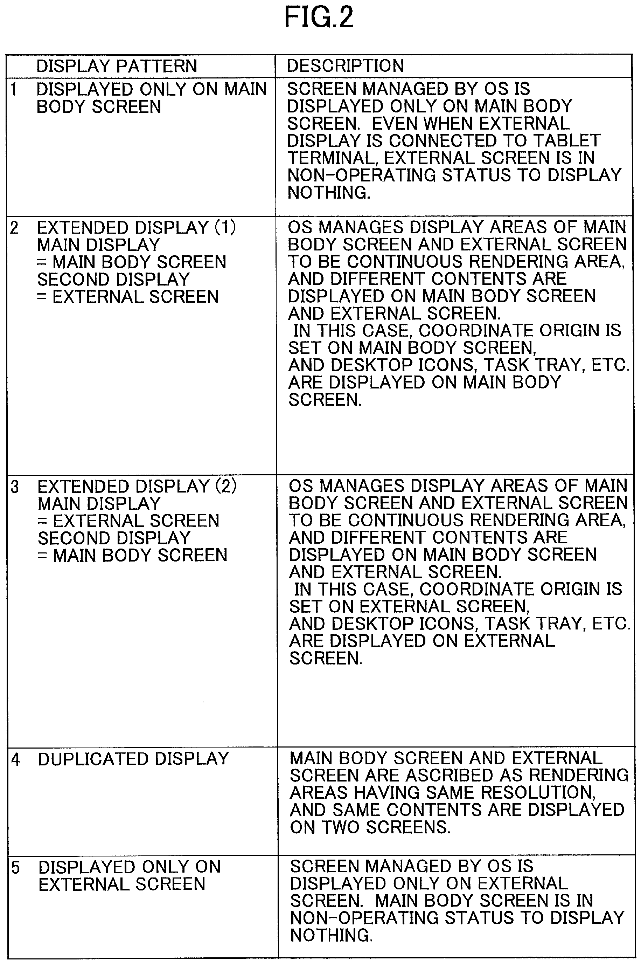

According to the present embodiment, in the configuration of the display device depicted in FIG. 1, an output destination of an image may optionally be switched between the main body screen built in the main body of the tablet terminal 10 and an external screen of the external display 20. FIG. 2 illustrates patterns (hereinafter also referred to as "display patterns") that may be considered as combinations of image output destinations on the main body screen of the tablet terminal 10 and on the external screen of the external display 20. Depending on the specification of the OS, for example, in a case of Windows (registered trademark), any one of the display patterns depicted in FIG. 2 may be selected and output to the screens. Display patterns 1 to 5 will be described below.

### • Display pattern 1

The display pattern 1 indicates that a screen is displayed only on the main body screen. In this case, a screen managed by an OS is displayed on the main body screen (of the tablet terminal 10), and even when the external display 20 is coupled to the tablet terminal 10, the external screen is in a non-operating status to not display anything.

### • Display pattern 2

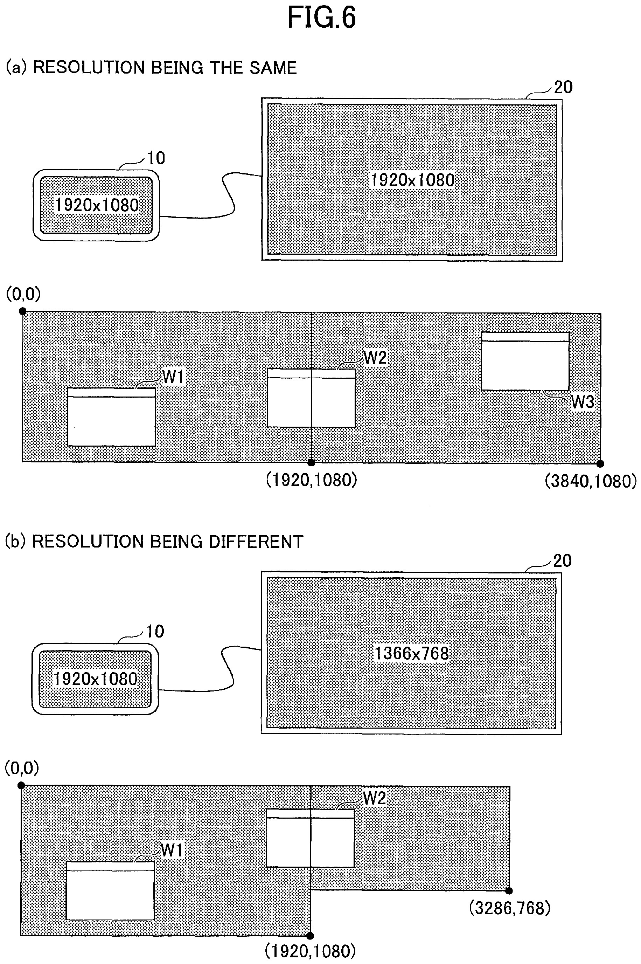

The display pattern 2 indicates that a screen is extended to be displayed on two screens; the main body screen of the tablet terminal 10 acts as a main (first) display, and an external screen of the external display 20 acts as a second display. In this case, the OS manages respective display areas of the main body screen and the external screen to be a continuous rendering area, and different contents are displayed on the main body screen and the external screen, respectively. Specifically in this status, a coordinate origin is set on the main body screen, and the upper left corner of the main body screen acts as the coordinate origin (0,0) (see (a) and (b) in FIG. 6). In this case, desktop icons, a task tray, etc. are displayed on the main body screen, for example. As described above, the extended display in which the coordinate origin is set on the main body screen is referred to as "extended display (1)".

### • Display pattern 3

The display pattern 3 indicates that a screen is extended to be displayed on two screens; the external screen display acts as a main-display and the main body screen acts as the second display. In this case, the OS manages respective display areas of the main body screen and the external screen to be a continuous rendering area, and different contents are displayed on the main body screen and the external screen, respectively. Specifically in this status, the coordinate origin is set on the external screen, and the upper left of the external screen acts as the coordinate origin (0, 0). In this case, desktop icons, a task tray, etc. are displayed on the external screen, for example. As described above, the extended display in which the coordinate origin is set on the external screen is referred to as "extended display (2)".

### • Display pattern 4

The display pattern 4 indicates a screen is duplicated to be displayed on two screens of the main body screen and the external screen. In this case, the main body screen and the external screen are considered as rendering areas having the same resolution, and the same contents are displayed on the two screens.

### • Display pattern 5

The display pattern 5 indicates that a screen display is performed only on the external screen. In this case, a screen managed by the OS is displayed on the external screen, and even when the external display 20 is coupled to the tablet terminal 10, the main body screen is in a non-operating status to not display anything.

### DISORDERED LAYOUT

Some of applications for the tablet terminal 10 may have a function of creating an image with an optimum design to be displayed on a small main body screen mounted on the tablet terminal 10 in improved viewability. Some other applications may be made with a user interface that is easy to operate with a touch panel on the main body screen.

In a case where such an application is displayed on the external screen, the applications designed for the small screen result in being displayed on the large screen. This may display the size of the character or the button to be larger than expected. Further, due to the resolution, the layout may become disordered or an image may exceed beyond the rendering area of the screen.

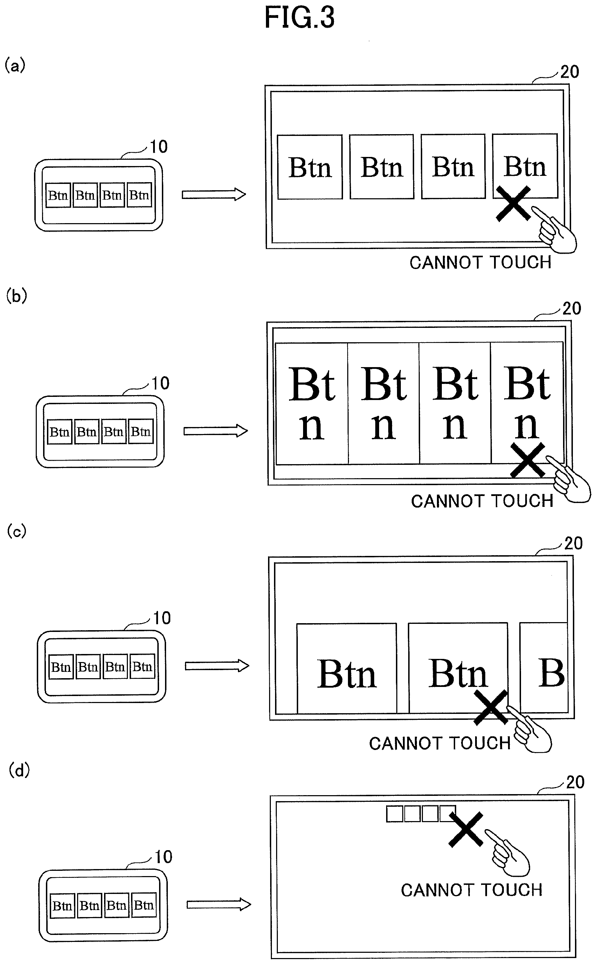

Further, even when the application for the tablet terminal 10 is made to be easy to touch for operating with the touch panel or digitizer, a user is not able to perform an input operation by touching the external display 20 not having a touch panel, which may lose user operability. For example, display statuses that may occur due to the difference between the resolution of the main body screen and the resolution of the external screen will be described with reference to FIG. 3.

### (RESOLUTION OF MAIN BODY SCREEN = RESOLUTION OF EXTERNAL SCREEN RESOLUTION)

In a case where the resolution of the main body screen and the resolution of the external screen are the same, and the display pattern 5 (displayed only on the external display 20) is set, as depicted in (a) of FIG. 3, an image displayed on the main body screen is displayed directly on the external screen without disordering the layout. The image is not displayed on the main body screen.

However, in a case where an application designed for the tablet terminal 10 generates a screen for a user to easily perform a touch operation on the screen of a small size of approximately 6 inches, an image may be displayed unnecessarily larger on the external screen. For example, as depicted in (b) of FIG. 3 in a case where a screen that is maximized is displayed on a full screen of the main body screen, and four or more buttons (user interface) are arranged on the main body screen, only four buttons may be displayed on the external screen of the external display 20. In addition, in a case where an application is activated while presentation is being performed with a projector, such a display will be rendered on an entire screen. Further, buttons etc. displayed on the external screen will not be directly touched unless the function of the touch panel is installed in the external display 20. Hence, a mouse or the like may need to be used for performing operations, leading to deficiencies in user operability and convenience.

### (RESOLUTION OF MAIN BODY SCREEN > RESOLUTION OF EXTERNAL SCREEN RESOLUTION)

In a case where the resolution of the main body screen is higher than the resolution of the external screen, and the display pattern 5 (displayed only on the external display 20) is similarly set, an image displayed on the main body screen with high resolution is displayed on the external screen with low resolution. In such a case, reproducing the layout displayed on the main body screen directly on the external screen when the application is executed by the OS may be unachieved.

The layout to be displayed, as actually appears, depends on the mechanism and application of the OS. For example, in a case where the size of each component (each image) on the screen is automatically adjusted such that the components such as buttons constituting the application fit within the main body screen, the layout may appear incorrectly despite the UI components fitting within the external screen. Further, in a case where such automatic adjustment is not performed, as depicted in (c) of FIG. 3, the layout may be exceed beyond the rendering area of the external screen. Further, a user is unable to directly touch the buttons or the like displayed on the external screen unless the function of the touch panel is installed in the external display 20. Even when the function of the touch panel is installed in the external display 20, a user is unable to touch the buttons disposed on the out-of-screen portion of the layout.

### (RESOLUTION OF MAIN BODY SCREEN < RESOLUTION OF EXTERNAL SCREEN RESOLUTION)

In a case where the resolution of the main body screen is lower than the resolution of the external screen, and the display pattern 5 (displayed only on the external display 20) is similarly set, an image displayed on the main body screen with low resolution is displayed on the external screen with high resolution. Hence, as depicted in (d) of FIG. 3, there is a possibility that an extremely small image, though being sufficiently disposed within the rendering area of the external screen, may be displayed. In such a case, a user is also unable to directly touch the buttons or the like displayed on the external screen unless the function of the touch panel is installed in the external display 20. Even when the function of the touch panel is installed in the external display 20, a display status of images that are extremely small may result in substantial impracticality for a user to touch, leading to erroneous operations.

In this embodiment, since the size and resolution of the main body screen of the tablet terminal 10 differ from those of the external screen of the external display 20, some defects such as disordering the layout may occur when the application for the tablet terminal 10 is displayed on the external display. The present embodiment may be enabled to eliminate such defects. In addition, with respect to a user being unable to touch operations with respect to the buttons or the like displayed on the external display 20 because the external display 20 is not provided with a touch panel, the present embodiment may also be enabled to eliminate such defects.

### FUNCTIONAL CONFIGURATION

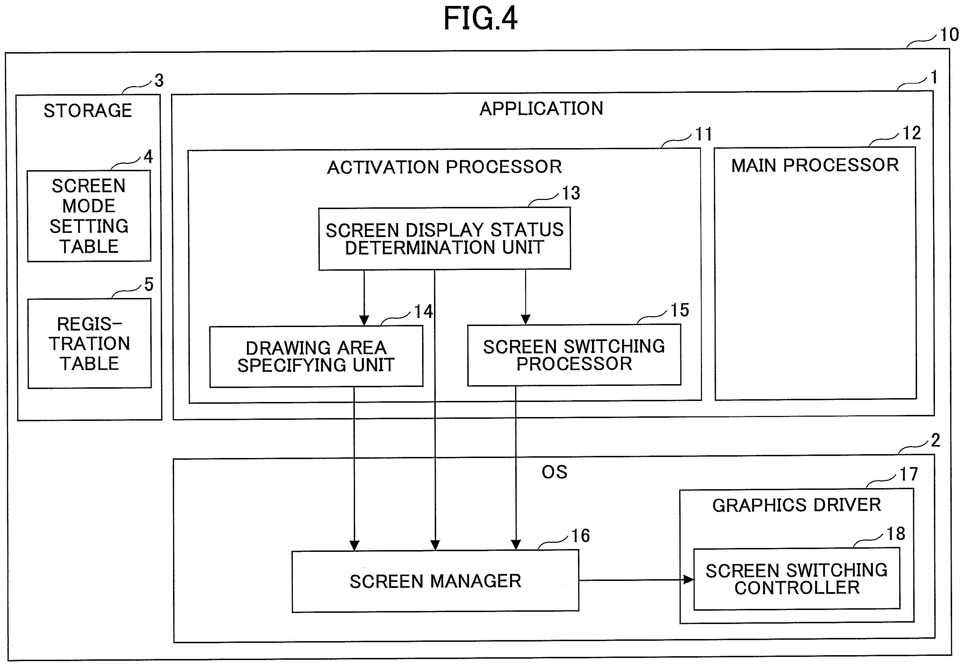

An application configured to execute an image output control method according to the present embodiment is activated on an OS 2 of the tablet terminal 10 as depicted in FIG. 4, for example. The application 1 executed in the present embodiment includes an activation processor 11 and a main processor 12. The activation processor 11 executes image output control upon activation of the application 1. The main processor 12 performs necessary processes via the application 1.

The activation processor 11 includes a screen display status determination unit 13, a rendering area specifying unit 14, and a screen switching processor 15. The screen display status determination unit 13 checks a display status of a screen when the application 1 is activated. The rendering area specifying unit 14 specifies an area on the screen for displaying an image created by execution of the application 1. The screen switching processor 15 requests the OS 2 to switch an output destination (display destination) of the screen as required.

The OS 2 has a screen manager 16. The screen manager 16 manages a connection status of a display device such as the tablet terminal 10 having the main body screen and the external display 20 having the external screen and the display status of which display devices are being displayed.

A Graphics driver 17 is installed in the OS 2. The graphics driver 17 has a screen switching controller 18. In response to a screen switching request from the OS 2, the screen switching controller 18 performs switching control of the screen output destination with respect to a graphics controller (see FIG. 6).
When the activation of the application 1 is started, the screen display status determination unit 13 acquires, from the screen manager 16 of the OS 2, a connection status of another display device such as the external display 20 and information on the screen output destination. In the present embodiment, the connection status of the display may be acquired by detecting that a connection line such as the HDMI cable has coupled to the tablet terminal 10 and the external display 20.

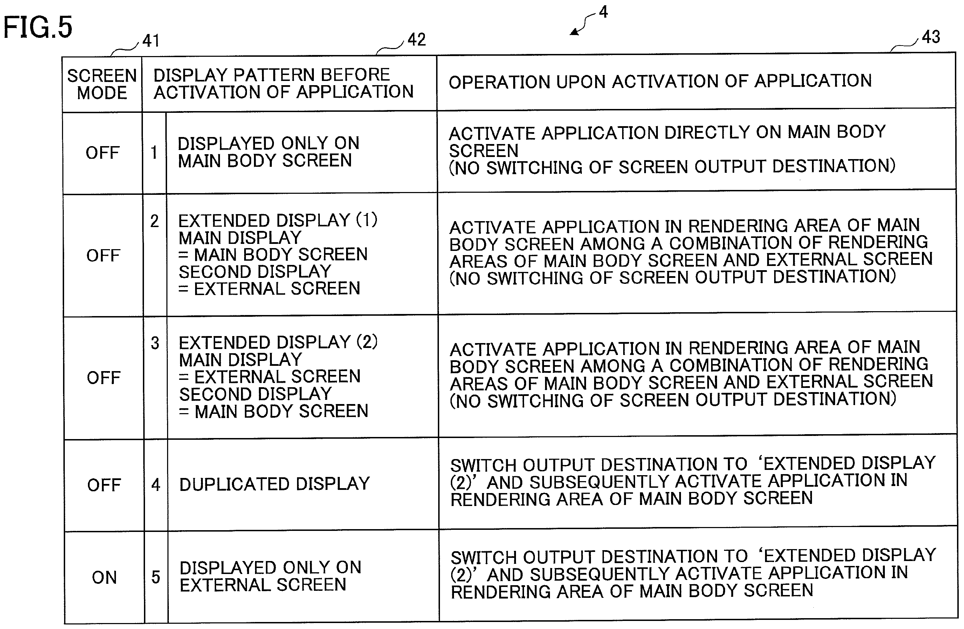

The screen display status determination unit 13 obtains screen output destination information by acquiring a screen mode from the screen manager 16. The screen mode is set in a screen mode setting table 4. FIG. 5 illustrates an example of a screen mode setting table 4. The screen mode setting table 4 includes settings of a screen mode 41 and a display patterns 42 before the activation of the application, and respective definitions of screen operations 43 upon activation of the application 1 with respect to the display patterns 42. On this point, the screen mode 41 of the display pattern 42 includes a setting "ON". Note that respective display patterns of FIG. 5 correspond to the display patterns of FIG. 2. The screen mode setting table 4 is stored in the storage 3 of the tablet terminal 10. The registration table 5 stored in the storage 3 will be described in a modification of the present embodiment.

In the example of FIG. 5, in a case of the display pattern 42 set before activation of the application in the screen mode setting table 4 being "1", to "activate the application directly on the main body screen" is defined as the operation 43 upon activation of the application 1. In this case, switching of the screen output destination does not occur.

In a case of the display pattern 42 before activation of the application 1 being "2", to "activate the application 1 in the rendering area of the main body screen, from among a combination of the rendering areas of the main body screen and the external screen" is defined as the operation 43 upon activation of the application 1. In this case, switching of the screen output destination does not occur.

In a case of the display pattern 42 before activation of the application 1 being "3", to "activate the application 1 in the rendering area of the main body screen, from among a combination of the rendering areas of the main body screen and the external screen" is defined as the operation 43 upon activation of the application 1. In this case, switching of the screen output destination does not occur.

In a case of the display pattern 42 before activation of the application 1 being "4", to "switch destination of output to 'extended display (2)' and subsequently activate the application 1 in the rendering area of the main body screen" is defined as the operation 43 upon activation of the application 1.

In a case of the display pattern 42 before activation of the application 1 being "5", to "switch destination of output to 'extended display (2)' and subsequently activate the application 1 in the rendering area of the main body screen" is defined as the operation 43 upon activation of the application 1.

In the example of FIG. 5, the screen mode 41 of the display pattern 5 is "ON". In this case, a user only uses the external display 20 coupled to the tablet terminal 10 for outputting a screen on the external display 20 and the main body screen is disabled. Accordingly, the screen switching processor 15 that has acquired the screen mode 41 requests the screen manager 16 of the OS 2 to switch the screen output destination. The OS receives such a request, and requests the graphics driver 17 to switch the screen. As a result, the main body screen is enabled for display.

In a case where switching is not required or in a case where switching of the screen has been completed, the rendering area specifying unit 14 of the application 1 performs control to display a window of the application 1 in the rendering area corresponding to the main body screen, based on the information on the rendering area acquired from the screen manager 16 of the OS 2.

In FIG. 6, (a) and (b) illustrate examples of a rendering area set by the rendering area specifying unit 14 according to the present embodiment. In FIG. 6, (a) and (b) illustrate the rendering area managed by the OS 2 when the two screens are displayed in an extended manner. For example, in an OS such as Windows, rendering areas of two screens are managed as one continuous area.

For example, as depicted in (a) in FIG. 6, in a case of the main body screen of the tablet terminal 10 and the external screen of the external display 20 having the same resolution, an area obtained by connecting two rendering areas of the same size is managed as a rendering area.

By contrast, in a case of the main body screen and the external screen having different resolutions being coupled, as depicted in (b) in FIG. 6, rendering areas of different sizes that are coupled is managed as one rendering area. The windows W 1 to W 3 of the application 1 may be arranged in this rendering area without any restriction.

An example of a display pattern combining the main body screen and the external screen is as illustrated in FIG. 2. In the present embodiment, when the application 1 is activated in each of the conditions with the display patterns depicted in FIG. 2, the activated application 1, which is activated by performing a corresponding one of the operations 43 upon activation of the application 1 depicted in FIG. 5, is displayed on the main body screen.

### HARDWARE CONFIGURATION

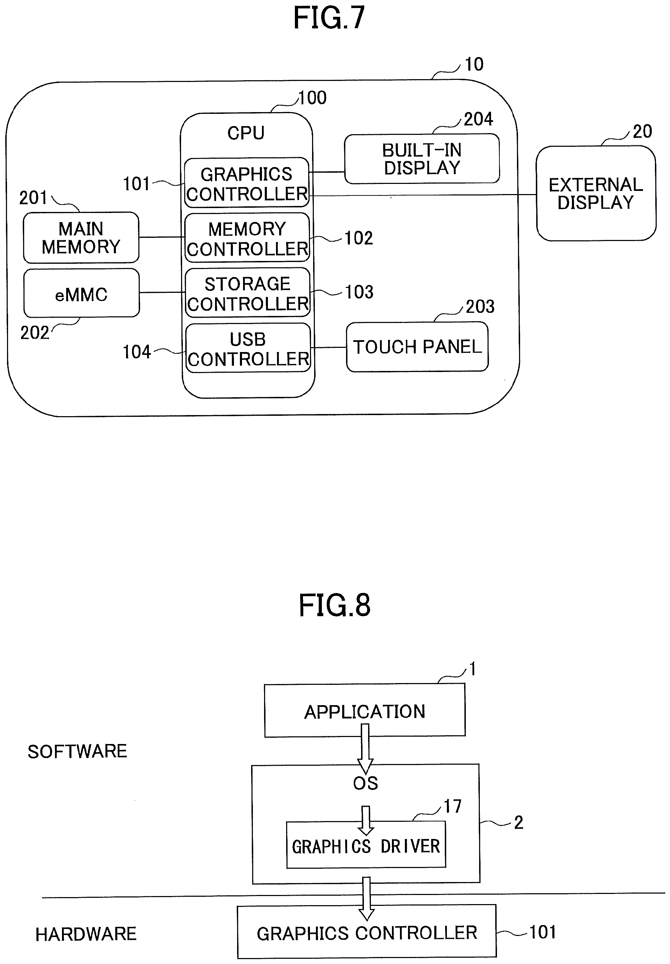

Next, a description is given, with reference to FIG. 7, of an example of the hardware configuration of the tablet terminal 10. The tablet terminal 10 includes a CPU 100, a main memory 201, an eMMC (embedded Multi Media Card) 202, a touch panel 203, and a built-in display 204. The CPU 100 includes a graphics controller 101, a memory controller 102, a storage controller 103, and a USB controller 104.

The memory controller 102 manages the main memory (main storage) 201 of the tablet terminal 10. The graphics controller 101 manages display contents of screens and manages the display devices such as the external display 20. The graphics controller 101 manages a part of the area in the main memory 201 as a VRAM (Video RAM) area and manages the status of the rendering area using the main memory 201. The graphics controller 101 is coupled to the built-in display 204. In addition, the graphics controller 101 may be coupled to the external display 20 using an HDMI cable or the like.

A nonvolatile storage (auxiliary storage) such as the eMMC 202 or the like is coupled to the storage controller 103. The eMMC 202 and the like stores the OS 2 and the application 1. For example, the touch panel 203 enables an input operation by touch on the screen of the built-in display 204. As a result, the tablet terminal 10 functions as an input device and provides a user with an operation tool. In the example of FIG. 7, the touch panel 203 is coupled by the USB controller 104; alternatively, the touch panel 203 may be coupled by other interfaces. In addition, the tablet terminal 10 may be provided with a digitizer in place of a touch panel, or provided with both the digitizer and the touch panel.

In this example, the memory controller 102 and the graphics controller 101 are included in the CPU 100; however, these controllers may be constituted by chips differing from the CPU 100.

As described above, the main body of the tablet terminal 10 is provided with the built-in display 204 and is not generally provided with a keyboard. Hence, a user may perform input operations on a screen by directly touching the main body screen of the tablet terminal 10 via a touch panel 203 or with a digitizer. In this description, the tablet terminal 10 is used as an example of display devices; however, a PC (personal computer) having a keyboard may be used in place of the tablet terminal 10. Further, the tablet terminal may be a mobile device such as a smartphone, a portable information terminal (Personal Digital Assistant: PDA), a mobile phone, a mobile music device, a game machine, or the like.

### SOFTWARE CONFIGURATION

Next, a description is given, with reference to FIG. 8, of an example of the software configuration of the tablet terminal 10. In the present embodiment, it is assumed that in the tablet terminal 10, the application 1 is operating on the OS 2 under the control of the CPU 100.

In the OS 2, device drivers for the respective devices are installed in order to operate various devices. In this embodiment, in particular, in order to use the graphics function, the graphics driver 17 is installed as depicted in FIG. 8. Further, an application 1, which is a main entity of the present embodiment, is installed in the OS 2. A process performed by the application 1 on the device driver is executed by access from an API (application programming interface) whose specifications are disclosed by the OS 2 and the device driver. Therefore, when the application 1 switches between the main body screen of the tablet terminal 10 and the external screen of the external display 20 as the screen output destination, the application 1 requests the OS 2 to switch using the API. The OS 2 requests switching to the graphics driver 17. Finally, the graphics driver 17 controls the hardware graphics controller 101 based on software processes to implement necessary processes. The above has illustrated the overall configuration, functional configuration, hardware configuration, software configuration, and basic operation policy of the display device when implementing the image output control method according to the present embodiment. The functions of the respective components in FIG. 6 are implemented by causing the CPU 100 to execute the image output control program installed in the OS 2 to perform an image output process using the main body screen and the external screen.

The following illustrates an implementation method of the image output control process in the application 1. In the present embodiment, two methods, i.e., the first method and the second method, may be given as a method of implementing the image output control process in the application 1. The first method is to implement the image output control process in a specific application 1 designed for the tablet terminal 10. The second method is to implement the image output control process in a launcher for activating a group of applications. The first method will be described as a present embodiment, and the second method will be described as a modification of the present embodiment.

### (IMPLEMENTATION IN SPECIFIC APPLICATION 1: FIRST METHOD)

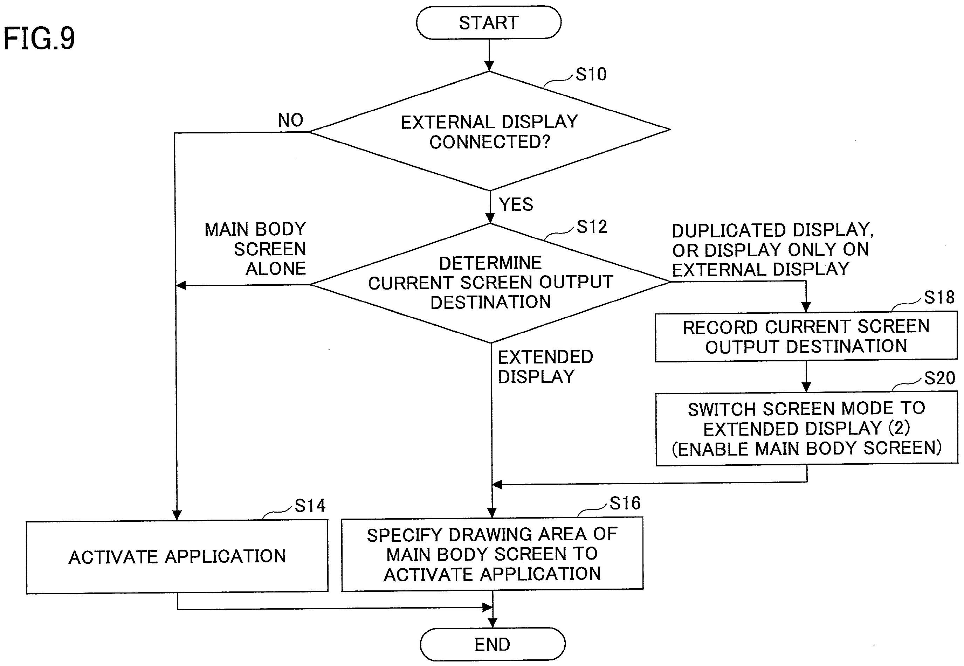

In this case, the function of the present embodiment is implemented in the application 1 itself that is designed for a small screen. Specifically, among the processes of the application 1, a function of the image output control process of the present embodiment is implemented in an initially retrieved process such as activation, initialization, or the like. The following illustrates a flow of an image output control process, which is executed upon activation of the application 1, as will be described with reference to FIG. 9.

First, the activation processor 11 determines whether the external display 20 is coupled (step S10). In a case where the activation processor 11 determines that the external display 20 is not coupled, the main body screen alone will act as an output destination. Accordingly, the activation processor 11 causes the application 1 to operate without performing any additional processes (step S14), and ends this process.

By contrast, in a case where the activation processor 11 determines that the external display 20 is coupled, the screen display status determination unit 13 determines an output destination of the screen, based on the screen mode setting table 4 (step S12). The screen display status determination unit 13 determines screen destination of the output based on the screen mode 41 set in the screen mode setting table 4 depicted in FIG. 5.

For example, in a case where the screen mode 41 is set (ON) to the display pattern 1, the screen destination of the output will be the main body screen alone. In this case, there is no need to switch the screen destination of the output to the main body screen. Thus, the activation processor 11 activates the application 1 on the main body screen without performing any additional processes (step S14), and ends this process.

In a case where the screen mode 41 is set (ON) to the display pattern 2 or the display pattern 3, the screen destination of the output will be a rendering area combining rendering areas of both the main body screen and the external screen, such that an image or the like is extendedly displayed across the two screens (i.e., an image or the like is displayed on both screens). In this case, irrespective of the main body screen acting as the main (first) display or the second display, the screen switching processor 15 switches a coordinate origin to specify the rendering area of the main body screen, thereby making the main body screen to act as the screen output destination. After switching the coordinate origin, the activation processor 11 activates the application 1 on the main body screen (step S16), and ends this process.

The main body screen may be specified by any method, and not specifically limited to specifying coordinates of the rendering area corresponding to the main body screen in a case where the main body screen and the external screen form continuous rendering areas. For example, in a case where the OS 2 manages an ID for uniquely identifying each of the screens, enabling specification of a display destination of the application 1, the ID for identifying the corresponding screen may be used for specifying the main body screen as the display destination of the application 1.

In a case where the screen mode 41 is set (ON) to the display pattern 4, the screen output destination will be a rendering area combining the rendering areas of the main body screen and the external screen, and a duplicated image will be displayed on each of the screens. Further, as depicted in FIG. 5, in a case where the screen mode 41 is set (ON) to the display pattern 5, the screen output destination will be the external display alone. In these cases, the main body screen needs to be enabled, and the screen output destination needs to be switched to the main body screen. Accordingly, in a case where the main body screen is disabled, the rendering area specifying unit 14 specifies the main body screen as the rendering area, and records information on the screen output destination before being switched in the main memory 201 or the like (step S18). Thereafter, the screen switching processor 15 switches the screen output destination to the extended display (2). After switching the screen output destination, the activation processor 11 activates the application 1 in the rendering area of the main body screen (step S20), and ends this process.

According to the image output control process described above, the application 1 will be displayed on the main body screen every time the application 1 is activated. According to the present embodiment, upon the activation of the specific application 1 with a design optimized for the small screen of the tablet terminal 10, the external display 20 or the projector may be coupled to output the screen without any deterioration in display of the external display 20 or the projector. That is, according to the present embodiment, display deterioration may be prevented by displaying the application 1 invariably within the rendering area of the main body screen of the tablet terminal 10.

For example, in a case where a user attempts to activate the application 1 with the display pattern 5, in which the main body screen is disabled and only the external display 20 is selected as the screen output destination, an image will not normally be displayed on the main body screen because the main body screen is disabled.

Hence, according to the present embodiment, in such a case, when a user attempts to activate the application 1, the screen output destination is switched to enable the disabled main body screen, and the application 1 is subsequently activated, thereby enabling the main body screen to perform display by the application 1. In this case, "to enable the main body screen" specifically indicates to "switch to the extended display (2) of the display pattern 3". As a result, it may be possible to specify the external display 20 as the main-display to change the screen destination of the output while enabling the main body screen and retaining the enabled display of the external display 20. Hence, the contents that have been displayed on the external display 20 may be retained on the external display 20 while being displayed. According to the present embodiment, when the screen display in the present embodiment is switched back to the original screen display, a user may continue stable operation on the main-display without changing work environment on the external screen, by setting the external display 20 as a main-display.

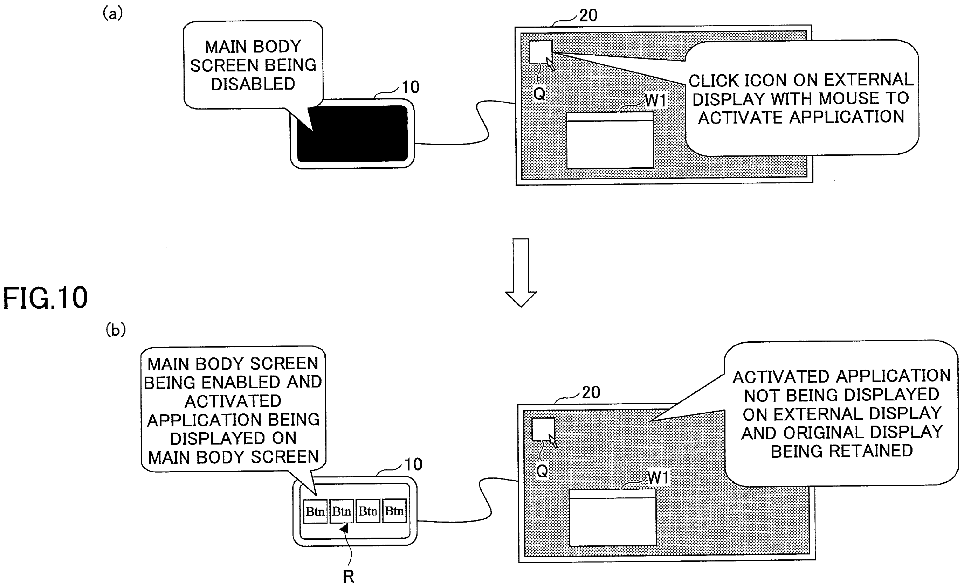

FIGS. 10A and 10B represent examples of operations. The tablet terminal 10 is coupled to the external display 20. In the example of (a) of FIG. 10, a screen is output only on the external display 20, and the tablet terminal 10 is disabled. In this example, a window W 1 and an icon Q are displayed on a desktop screen displayed on the external display 20. In this screen status, a user clicks the icon Q with a mouse to select a specific application 1 to activate the application 1. In this case, when the function of the screen output control process according to the present embodiment is implemented in the application 1, the screen output destination is changed according to the definition of the extended display (2). This enables the main body screen. Next, as depicted in (b) of FIG. 10, an image R generated by the application 1 is displayed in the rendering area of the main body screen. Note that the contents displayed on the external display 20 retain their original display on the external display 20.

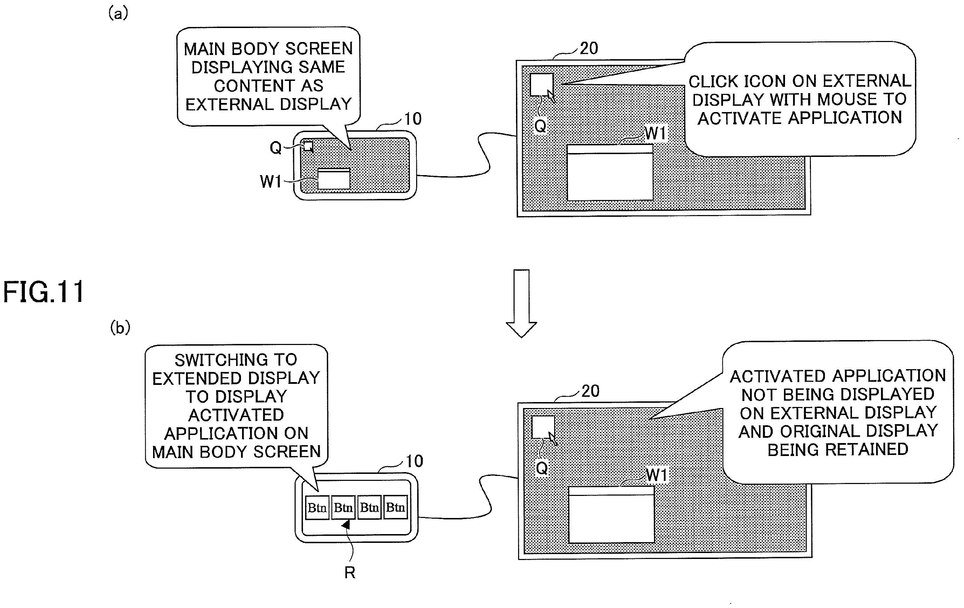

In the examples depicted in FIG. 11, the external display 20 is coupled to the tablet terminal 10, and duplicated display is set to the external display 20 and the tablet terminal 10, which enables images of the same contents to be displayed on the main body screen and the external screen. In this case, the specific application 1 indicated by the icon Q is selected from the desktop screen displayed on the external display 20, whereby the application 1 is activated. At that time, similar to the example of FIG. 10, after changing the screen output destination to the extended display (2), the image R generated by the application 1 is displayed in the rendering area of the main body screen.

Accordingly, it is possible to prevent the screen of the application 1 designed to be optimum according to the screen size of the tablet terminal 10 from being displayed as small on the external display 20 or from being displayed outside the display area due to a difference in resolution between the tablet terminal 10 and the external display 20. Further, the screen generated by the application 1 is displayed on the main body screen by enabling the disabled main body screen. This makes it possible for a user to perform an input operation via the screen on the touch panel of the tablet terminal 10. In addition, when a user performs some work on the external display, display contents on the external display may still be retained as they are. Thus, the user may continue operation without being interrupted.

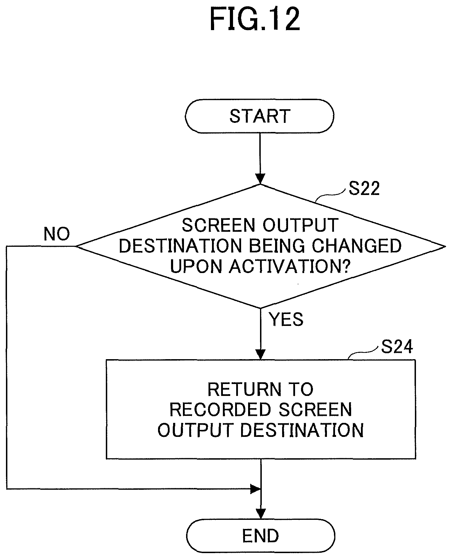

Further, when the screen output destination is switched by the image output control process of the present embodiment upon activation of the application 1, an end process depicted in FIG. 12 is executed upon ending the application 1. In the ending process of the application 1, the rendering area specifying unit 14 determines whether the screen output destination has been changed upon activation of the application 1 (step S22). When the rendering area specifying unit 14 determines that the screen output destination has been changed, the rendering area specifying unit 14 returns the screen output destination to the original status of the screen before activation of the application 1 (step S24), based on information about the original screen output destination recorded in the main memory 201, and ends the process. When the rendering area specifying unit 14 determines that the screen output destination has not been changed, the rendering area specifying unit 14 immediately ends the process.

### MODIFICATION

### (IMPLEMENTATION ON LAUNCHER: SECOND METHOD)

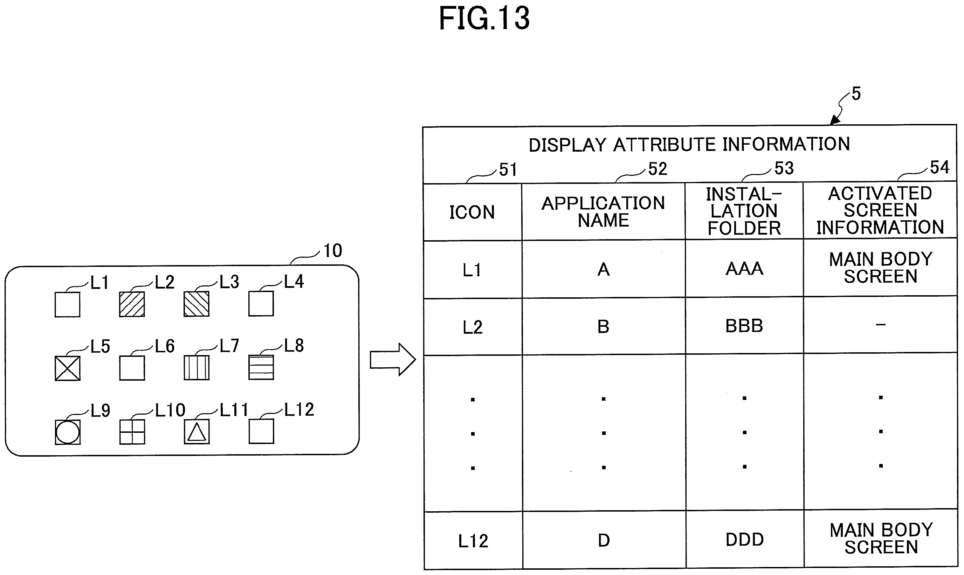

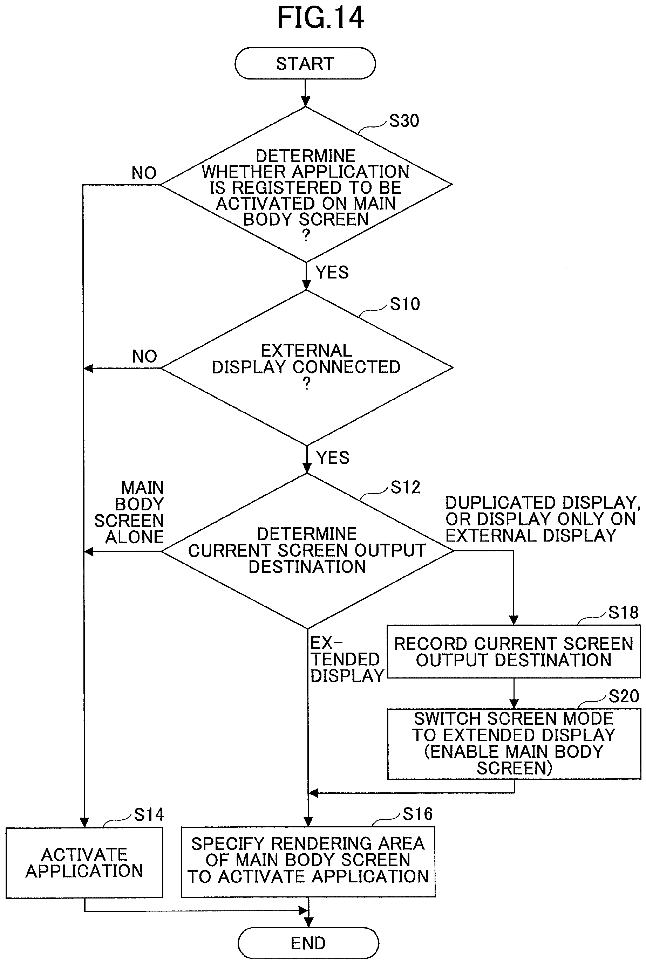

Finally, a screen output control process according to a modification of the present embodiment will be described with reference to FIGS. 13 and 14. In the modification, a description is given of an example of the screen output control function that is implemented on the launcher.

In this case, the screen output control function is implemented on the launcher for activating the application 1. Hence, it is not necessary for the application 1 designed for the tablet terminal 10 to be activated to implement the screen output control function. Accordingly, all the applications included in the launcher may be provided with the same effect by the screen output control.

The launcher is a tool for displaying a list of multiple applications frequently used by a user registered in advance to enable the user to immediately activate these applications. For example, the tablet terminal 10 of FIG. 13 registers a launcher displaying a list of icons L1 to L12 for activating the multiple applications frequently used by the user.

To register an application in the launcher, display attribute information such as an application name 52, an installation folder 53, and the like may need to be registered in the registration table 5. An icon 51 may be registered according to the application name 52. In this modification, activation screen information 54 indicating whether to activate an application to be registered on the main body screen is added to the display attribute information. In a case where a user desires to activate an application to be registered in the launcher on the main body screen without failing, the user registers the application by specifying the main body screen in the activation screen information 54.

FIG. 14 illustrates a flow of selecting an application from the launcher and starting activation of the selected application. First, based on the registration table 5, the launcher determines whether to activate an application on the main body screen according to display attribute information (application name 52, installation folder 53) of the application that is linked to the icon 51 specified by the user (step S30). Note that in a case of an application being not registered to be activated on the main body screen, the function of the image output control process needs not to be executed; hence, the specified application is thus directly activated (step S14), and the process then ends.

However, in a case of an application being registered to be activated on the main body screen, step S10 and steps subsequent to step S10 are executed. Steps subsequent to step S10 are provided with the same step numbers as those given to the screen output control process depicted in FIG. 9. Since these are similar processes, a duplicated description will be omitted here.

In a case of implementing an application in the launcher as similar to that in the above-described embodiment, when the screen destination of the output is switched upon activation of the specified application, the output destination (original output destination) before being switched is recorded. Then, a process of returning the screen output destination to the original screen output destination as before the activation of the application will be executed upon ending the application. In this case, the screen switching process (FIG. 12) is executed upon recognizing the ending of the process of the application specified by a launcher.

As described above, according to the screen output control method according to the modification of the present embodiment, when the application registered in the launcher is activated, an application generation screen will be displayed invariably on the main body screen of the tablet terminal 10 without failing. As a result, even when a screen is displayed on an external display having a large screen or a projector, disordering a layout of the screen and degrading the touch operation on the external display 20, a user may be able to perform touch operation on the main body screen of the tablet terminal 10. In addition, displaying the application generation screen invariably on the main body without failing may secure an input operation by touching the screen even when the touch panel is not installed on the external display 20.

Further, even when the operation to switch the screen output destination is executed in order to change the main screen from the disabled status to the enabled status, the display content of the external display 20, on which the user has been working, will be retained. As a result, the above-described advantageous effect may be provided without disturbing the user's work.

As described above, according to the screen output control method according to the present embodiment and the modification of the present embodiment, it is possible to improve an output process of an image on the multiple display devices having different screen functions.

The image output control method, the image output control program, and the display device have been described in the above embodiment and modification; however, the image output control method, the image output control program, and the display device according to the present invention are not limited to the above embodiments; various modifications and improvements may be made within the scope of the present invention. Further, when there are two or more embodiments and modifications, these embodiments and modifications may be combined within a scope of these embodiments and modifications having no contradiction.

For example, the configuration of the display device according to the above embodiment and its modification is merely an example, and the scope of the present invention is not limited this example. It is needless to say that there are various system configuration examples according to an application or purpose. For example, the number of display devices to which a tablet terminal is coupled is not limited to one, and multiple display devices may be coupled to the tablet terminal.

In the above embodiment and its modification, among the multiple display devices having different screen functions, one of the display devices is used as the external display acting as a display device, and the other is used as the other display device acting as the tablet terminal, such that when a screen function is unable to be implemented in one display device, screen function is implemented on the other display device. However, the present invention is not limited to this example. One of display devices may be one of a plurality of display devices having different screen functions, and another display device from a plurality of display devices may be another one of the display devices having different screen functions.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that the various changes, substitutions, and alterations could be made hereto without departing from the spirit and scope of the invention.

### EXPLANATION OF REFERENCE NUMERALS

- 1: application
- 2: OS
- 4: screen mode setting table
- 5: registration table
- 10: tablet terminal
- 11: activation processor
- 12: main processor
- 13: screen display status determination unit
- 14: rendering area specifying unit
- 15: screen switching processor
- 16: screen manager
- 17: graphics driver
- 18: screen switching controller
- 20: external display
- 100: CPU
- 101: graphics controller
- 102: memory controller
- 103: storage controller
- 104: USB controller
- 201: main memory
- 202: eMMC
- 203: touch panel
- 204: built-in display

## Claims

1. An image output control method executed by a computer to perform an image output process using respective screens of a plurality of display devices having different screen functions, the image output control method comprising:
implementing a screen function in a first display device of the display devices to act as an image output destination, in response to failing to implement the screen function in a second display device of the display devices due to the different screen functions; and
switching, after having the screen function implemented in the first display device, the image output destination to the second display device.

2. The image output control method as claimed in claim 1, further comprising:
outputting, upon activation of an application operated, an image to the first display device to implement a screen function in the first display device; and
switching, upon termination of the application, the image output destination to the second display device.

3. The image output control method as claimed in claim 2, further comprising:
implementing, upon activation of the application, the screen function by any one of the display devices specified based on display attribute information indicating the image output destination, in response to operating an application registering the display attribute information indicating the image output destination, among a plurality of applications registered in a launcher.

4. An image output control program for causing a computer to execute an image output process using screens of a plurality of display devices having different screen functions, the image output process comprising:
implementing a screen function in a first display device of the display devices to act as an image output destination, in response to failing to implement the screen function in a second display device of the display devices due to the different screen functions; and
switching, after having the screen function implemented in the first display device, the image output destination to the second display device.

5. The image output control program as claimed in claim 4, wherein the image output process further comprises:
outputting, upon activation of an application operated, an image to the first display device to implement a screen function in the first display device; and
switching, upon termination of the application, the image output destination to the second display device.

6. The image output control program as claimed in claim 5, wherein the image output process further comprises:
implementing, upon activation of the application, the screen function by any one of the display devices specified based on display attribute information indicating the image output destination, in response to operating an application registering the display attribute information indicating the image output destination, among a plurality of applications registered in a launcher.

7. A display device for outputting an image using a first screen of the display device itself and a second screen of another display device, the first screen and the second screen having different screen functions, the display device comprising:
a screen switching processor configured to
implement a screen function in the other one of the display devices to act as an image output destination, in response to failing to implement the screen function in the display device due to the different screen functions, and
switch, after having the screen function implemented in the other display device, the image output destination to the display device.

8. The display device as claimed in claim 7, wherein the screen switching processor
outputs, upon activation of an application operated, an image to the other display device to implement a screen function in the other display device, and
switches, upon termination of the application, the image output destination to the display device.

9. The display device as claimed in claim 8, wherein the screen switching processor
implements, upon activation of the application, the screen function by any one of the display devices specified based on display attribute information indicating the image output destination, in response to operating an application registering the display attribute information indicating the image output destination, among a plurality of applications registered in a launcher.
